# EUROPEAN PATENT SPECIFICATION

(11) **EP 0 539 429 B1**
(45) Date of publication and mention of the grant of the patent: **16.03.1994**
(21) Application number: 91912915.5
(22) Date of filing: 05.07.1991
(51) Int. Cl.: F16L 11/12, B29C 67/14, B29C 53/58

(54) **COMPOSITE PIPE WITH ONE OR MORE LAYERS OF STRIP MATERIAL WOUND AROUND AN INNER PIPE AND REEL PROVIDED WITH SUCH A COMPOSITE PIPE WOUND ONTO IT**
VERBUNDROHR MIT EINER ODER MEHREREN UM EIN INNENROHR GEWICKELTEN STREIFENMATERIALLAGEN UND HASPEL MIT EINEM SOLCHEN DARAUF GEWICKELTEN VERBUNDROHR
TUYAU COMPOSITE COMPORTANT UNE OU PLUSIEURS COUCHES D'UN MATERIAU EN BANDE ENROULE AUTOUR D'UN TUYAU INTERIEUR ET ROULEAU SUR LEQUEL EST ENROULE UN TEL TUYAU COMPOSITE

(30) Priority: 19.07.1990 NL 9001653
(43) Date of publication of application: 05.05.1993
(73) Proprietor: WAVIN B.V., NL-8011 CW Zwolle (NL)
(72) Inventor: VAN DER PLOEG, Frederik, NL-7721 HR Dalfsen (NL)
(74) Representative: Barendregt, Frank, Drs.
(86) International application number: NL9100120
(87) International publication number: WO9201885

(56) References cited:
- EP-A- 111 169
- WO-A-86/07432
- FR-A- 2 589 962
- OA-A- 1 586

## Description

The present invention relates to a composite pipe, at least comprising a thermoplastic inner pipe and one or more layers of strip material wound around the inner pipe.

Such a composite pipe is known from WO-A-86/07432. This International publication discloses a composite pipe comprising an inner thermoplastic pipe onto which one or more layers of metal strip is wound, and an outer pipe. The turns of the metal strip of one layer may comprise superposed areas or the turns may be spaced in which case a second layer of metal strip is wound to cover the space between the turns of the first layer. The turns of metal strip of the one or more layers are always connected to the inner layer or to the outer layer, over part of the width but over substantially the entire length of the strip material and therefore over substantially the entire length of the inner pipe.

The object of the present invention is to provide a composite pipe with an improved flexibility, said pipe, however, being able to withstand a high load, i.e. both internal pressure load and tensile load. To this end the invention is characterized in that the one or more layers of strip material wound around the inner pipe are connected to each other and/or to the inner pipe only over a part of the length of the inner pipe. According to the invention a pipe which is particularly flexible and can be wound up with a relatively small radius of curvature is provided. This means that great lengths of pipe can be transported easily, and great lengths of pipe can thus also be laid without connecting pieces. The latter can be advantageous, for example, in the case of applications such as the laying of pipes over the seabed or the like. The pipe according to the invention can also be bent easily around all kinds of obstacles. The invention provides a pipe which is extremely flexible and yet can withstand a high load, i.e. both internal pressure load and tensile load.

The one or more layers of strip material wound around the inner pipe are preferably connected at the ends of the inner pipe to each other and/or to the inner pipe. This simplifies the production of the pipe and increases the flexibility, due to the fact that the layers, with the exception of the ends, lie completely free.

In order to improve further the flexibility of the pipe according to the invention, the strip material of each layer is advantageously wound in such a way that there is a space measuring 2 - 20% of the width of the strip material, and preferably 5 - 10% of the width of the strip material, between the turns of the strip material. The flexibility of the pipe is improved by providing a space between the turns of the strip material of each layer. Winding with a space between turns is also simpler than winding without a space, while the turns of the strip material of each layer must lie closely against each other.

In particular, the strip material of the second layer is wound in such a way that it covers the space between the turns of the first layer. It can in fact happen that when the pipe is being used for conveying a medium under high pressure the material of the inner pipe is pressed into the space between the turns of the first layer. Winding the second layer in such a way that it ccvers the space between the turns of the first layer means that the material of the inner pipe is prevented from penetrating further, and possibly even leakage is prevented from occurring.

It will be clear that the winding angle of the wound strip material must be selected in such a way as is advantageous for the application in question. Thus, a small winding angle will be desirable in the case of high tensile loads and a large winding angle in the case of low tensile load and high internal pressure load. Combinations of different winding angles are also possible.

The width of the strip material of the first two layers is advantageously smaller than the width of the strip material of the other layers. The space between the turns of the strip material of the first layer is smaller then, which means that less penetration of the material of the inner pipe can occur in the case of, for example, a high internal pressure load, something which benefits the durability of the pipe according to the invention.

The strip material can be of many types of materials, but it is preferable to use strip material made of a fibre strip which may or may not be impregnated with plastic, and preferably a polypropylene-impregnated glassfibre strip. Fibre strip with or without plastic impregnation is extremely strong and durable. In the description, plastic strip reinforced with fibre strip, woven strip, metal gauze strip, metal woven strip etc. are also included.

In order to be able to protect the wound layers from the external environment such as, for example, soil, water, contaminations and damage, depending on the application, an outer jacket is preferably provided around the inner pipe provided with one or more layers of loosely wound strip material, the outer jacket advantageously being extruded round the inner pipe provided with one or more layers of loosely wound strip material. By means of extrusion the outer pipe in the not yet hardened state is provided around the inner pipe provided with one or more layers of loosely wound strip material, thus producing a close-fitting contact between the outer jacket and the outer layers of wound strip material. The outer jacket also ensures cohesion of the layers of wound strip material.

The invention also relates to a composite pipe, at least comprising an inner pipe and one or more layers of strip material wound around the inner pipe, the turns of the one or more layers being connected to each other, which is characterised in that the inner pipe is made of thermoplastic material, and in that the turns are connected only locally to each other, and the or each layer is displaceable relative to the inner pipe. The local connection can be achieved by, for example, techniques which are known to the person skilled in the art, such as welding, gluing etc. The pipe thus produced has good flexibility and can withstand an extremely high internal pressure load and tensile load. The winding angle can in fact be selected in such a way that it can withstand a maximum internal pressure load, while the necessary tensile load resistance can be adjusted by varying the distance between successive connections between the turns. Due to the fact that the or each layer is not connected to the inner pipe, it is possible to wind the or each layer separately onto a mandrel, and connect the turns locally and then slide them over the inner pipe. In this way it is ensured that during the local connection by welding or the like the inner pipe is not accidentally damaged or the strip material fixed to the inner pipe.

It is preferable to use reinforced polypropylene strip as the strip material, since it has very good strength and durability properties. Moreover, the turns of the abovementioned material are very easily connected by welding, gluing or the like.

Due to the fact that the turns rest against each other, it is also ensured that in the case of high internal pressure loads material of the inner pipe is not pressed between the turns.

Finally, the invention relates to a reel which is provided with a pipe according to the invention wound thereon.

The invention will be explained in greater detail below with reference to the appended drawing, in which:
Fig. 1 shows a partial cross-section of a cutaway composite pipe according to one embodiment of the invention; and
Fig. 2 shows a partial cross-section of a cutaway composite pipe according to another embodiment of the invention.

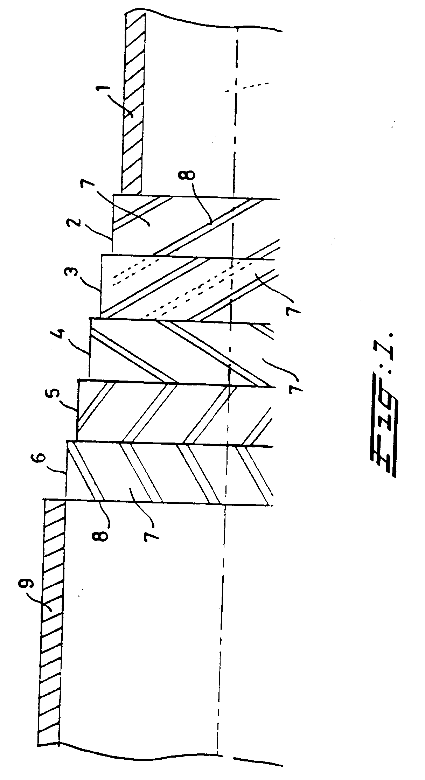

In Fig. 1 reference number 1 indicates a polyethylene inner pipe, which is provided with layers 2, 3, 4, 5 and 6 of loosely wound strip material 7. The spaces 8 between the turns of the strip material 7 are clearly visible in each layer. Layer 2 is wound with the same winding angle as layer 3, while layer 3 covers the spaces 8 of layer 2. The position of the spaces 8 of layer 2 is indicated by dotted lines in layer 3. In this way it is clear that the strip material 7 of layer 3 is wound over the space between the turns of the strip material of layer 2. Layers 2 and 3 are wound with a winding angle of 120° to the longitudinal axis. In the case of layer 4 the strip material 8 is wound with a winding angle of 60° to the longitudinal axis. Finally, two layers 5 and 6 are wound with a smaller and opposite winding angle over layer 4.

Reference number 9 indicates an outer jacket which is extruded around layer 6. This outer jacket can be of any desired plastic, but in this case it is by way of example also of polyethylene. The outer jacket can, of course, be of any other usable material such as, for example, gauze-type or fabric material.

The outer jacket ensures the cohesion of the pipe according to the invention and protects it from damage and the penetration of substances from the environment, such as soil, water, contaminations and the like.

The material of the inner pipe is in the present example polyethylene, therefore thermoplastic. Polyethylene, in general a thermoplastic material, makes it possible to connect the turns to the inner pipe by heating at the places where this is desired. Apart from polyethylene, many other thermoplastic materials, such as polypropylene, polyvinyl chloride, polyamide, polybutene, etc., can be used.

The strip material of the layers used can be the same or different. It preferably comprises glassfibre strip impregnated with polypropylene, comprising a width of for example 2.75 cm. In particular, the inner two layers are wound with strip material of a smaller width than the other layers, in order to make the space between the turns of the strip material of the first layer as small as possible. In this way when there is a high internal pressure load, less material of the inner pipe can penetrate through it.

It will be clear that a pipe according to the invention which is provided with layers of wound strip material with winding angles corresponding approximately to those of layers 2, 3 and 4 is more suitable for applications in which a high internal pressure occurs in the pipe than a pipe which is wound with strip material at a winding angle which corresponds to that of layers 5 and 6. The layers 5 and 6, with the winding angle indicated, are more suitable for a pipe which is subject to a great tensile load.. The desired winding angle of the turns of the layers can be set depending on the application. The pipe shown in the figure is suitable either for applications in which both an internal pressure load and a tensile load occur.

The wound strip material of layer 2 is welded to inner pipe 1 at the ends, layer 3 is welded to layer 2 at the ends, layer 4 is welded to layer 3 at the ends etc. It is, however, not absolutely necessary for the assembly of layers of strip material 7 wound round the inner pipe 1 and welded together to be connected also to the inner pipe 1.

For the connection of several pipes according to this embodiment, standard connecting pieces can be used, but it must be borne in mind that when a pipe according to the invention is cut through, the ends of the strip material of the layers must be fixed to each other at the abovementioned cut ends and possibly to the inner pipe before it is connected to a connecting piece. This is to prevent unwinding.

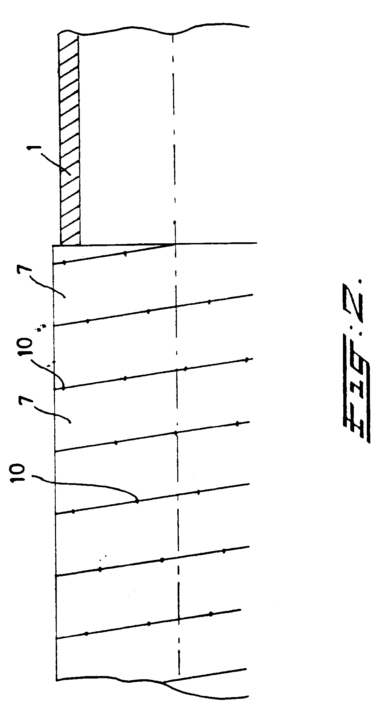

Fig. 2 shows an embodiment in which only one layer is wound around the inner pipe 1, while the turns of the strip material 7 lie against each other and are locally connected to each other by welding. By selecting the winding angle close to 90°, such a pipe can resist a very high internal pressure load. The level of the resistance to tensile load can be set by varying the distance between two connecting points 10. Stretched polypropylene strip is preferably used as the strip material.

The fact that the turns lie against one another prevents the material of the inner pipe from being pressed between the turns when there is a high internal pressure load.

It will be clear that several layers can be applied around the inner pipe with winding angles which are suitable for the particular application of the pipe. Layers according to Fig. 1 can also be combined with layers according to Fig. 2.

## Claims

1. A composite pipe, at least comprising a thermoplastic inner pipe and one or more layers of strip material wound around the inner pipe, characterised in that the one or more layers (2, 3, 4, 5, 6) of strip material (7) wound around the inner pipe (1) are connected to each other and/or to the inner pipe (1) only over a part of the length of the inner pipe.

2. The pipe according to claim 1, characterised in that the one or more layers (2, 3, 4, 5, 6) of strip material (7) wound around the inner pipe (1) are connected to each other and/or to the inner pipe (1) at the ends of the inner pipe.

3. The pipe according to claims 1 - 2, characterised in that the strip material (7) of each layer (2, 3, 4, 5, 6) is wound in such a way that there is a space (8) between the turns of the strip material (7).

4. The pipe according to claim 3, characterised in that the width of the space (8)- between the turns of the strip material (7) of a layer is 2 - 20% of the width of the strip material (7).

5. The pipe according to claims 3 - 4,characterised in that the space (8) is 3 - 10% of the width of the strip material (7).

6. The pipe according to claims 3 - 5, characterised in that the strip material (7) of the second layer (3) is wound in such a way that it covers the space (8) between the turns of the first layer (2).

7. The pipe according to claims 1 - 5, characterised in that the width of the strip material (7) of the first two layers (2, 3) is smaller than the width of the strip material (7) of the other layers (4, 5, 6).

8. The pipe according to claims 1 - 7, characterised in that the strip material (7) is a fibre strip which may or may not be impregnated with plastic.

9. The pipe according to claim 8, characterised in that the strip material (7) is a glassfibre strip impregnated with polypropylene.

10. The pipe according to claims 1 - 9, characterised in that an outer jacket (9) is provided around the inner pipe provided with one or more layers (2, 3, 4, 5, 6) of loosely wound strip material (7).

11. The pipe according to claim 10, characterised in that the outer jacket (9) is extruded around the inner pipe (1) provided with one or more layers (2, 3, 4, 5, 6) of loosely wound strip material (7).

12. A composite pipe, at least comprising an inner pipe of thermoplastic material and one or more layers of strip material wound around the inner pipe, the turns of the one or more layers being connected to each other, characterised in that the turns are connected only locally to each other, and the or each layer is displaceable relative to the inner pipe (1).

13. The pipe according to claim 12, characterised in that the strip material (7) is made of stretched polypropylene strip.

14. A reel, provided with a pipe wound onto it, characterised in that the pipe is a pipe according to one or more of the preceding claims 1 - 13.

## Patentansprüche

1. Verbundrohr, zumindest bestehend aus einem thermoplastischen Innenrohr und einer oder mehreren um das Innenrohr gewickelten Lagen aus Streifenmaterial, dadurch gekennzeichnet, daß die eine oder mehreren um das Innenrohr (1) gewickelten Lagen (2,3,4,5,6) aus Streifenmaterial (7) miteinander und/oder mit dem Innenrohr (1) nur über einen Teil der Länge des Innenrohrs verbunden sind.

2. Rohr nach Anspruch 1, dadurch gekennzeichnet, daß die eine oder mehreren um das Innenrohr (1) gewickelten Lagen (2,3,4,5,6) aus Streifenmaterial (7) miteinander und/oder mit dem Innenrohr (1) an den Enden des Innenrohrs verbunden sind.

3. Rohr nach den Ansprüchen 1 bis 2, dadurch gekennzeichnet, daß das Streifenmaterial (7) jeder Lage (2,3,4,5,6) derart gewickelt ist, daß ein Zwischenraum (8) zwischen den Windungen des Streifenmaterials (7) vorhanden ist.

4. Rohr nach Anspruch 3, dadurch gekennzeichnet, daß die Breite des Zwischenraums (8) zwischen den Windungen des Streifenmaterials (7) einer Lage 2 bis 20% der Breite des Streifenmaterials (7) beträgt.

5. Rohr nach den Ansprüchen 3 bis 4, dadurch gekennzeichnet, daß der Zwischenraum (8) 3 bis 10% der Breite des Streifenmaterials (7) beträgt.

6. Rohr nach den Ansprüchen 3 bis 5, dadurch gekennzeichnet, daß das Streifenmaterial (7) der zweiten Lage (3) derart gewickelt ist, daß es den Zwischenraum (8) zwischen den Windungen der ersten Lage (2) abdeckt.

7. Rohr nach den Ansprüchen 1 bis 5, dadurch gekennzeichnet, daß die Breite des Streifenmaterials (7) der ersten beiden Lagen (2,3) kleiner ist als die Breite des Streifenmaterials (7) der anderen Lagen (4,5,6).

8. Rohr nach den Ansprüchen 1 bis 7, dadurch gekennzeichnet, daß das Streifenmaterial (7) ein Faserstreifen ist, der mit Kunststoff getränkt sein kann oder nicht.

9. Rohr nach Anspruch 8, dadurch gekennzeichnet, daß das Streifenmaterial (7) ein mit Polypropylen getränkter Glasfaserstreifen ist.

10. Rohr nach den Ansprüchen 1 bis 9, dadurch gekennzeichnet, daß ein Außenmantel (9) um das mit einer oder mehreren Lagen (2,3,4,5,6) lose gewickelten Streifenmaterials (7) versehene Innenrohr vorgesehen ist.

11. Rohr nach Anspruch 10, dadurch gekennzeichnet, daß der Außenmantel (9) um das mit einer oder mehreren Lagen (2,3,4,5,6) lose gewickelten Streifenmaterials (7) versehene Innenrohr (1) extrudiert ist.

12. Verbundrohr, zumindest bestehend aus einem Innenrohr aus thermoplastischem Material und einer oder mehreren um das Innenrohr gewickelten Lagen aus Streifenmaterial, wobei die Windungen der einen oder mehreren Lagen miteinander verbunden sind, dadurch gekennzeichnet, daß die Windungen nur örtlich miteinander verbunden und die oder jede Lage in bezug auf das Innenrohr (1) verschieblich ist.

13. Rohr nach Anspruch 12, dadurch gekennzeichnet, daß das Streifenmaterial (7) aus einem gereckten Polypropylenstreifen besteht.

14. Haspel, versehen mit einem auf diese aufgewickelten Rohr, dadurch gekennzeichnet, daß das Rohr ein Rohr nach einem oder mehreren der vorhergehenden Ansprüche 1 bis 13 ist.

## Revendications

1. Tuyau composite comportant au moins un tuyau intérieur en matière thermoplastique et une ou plusieurs couches d'un matériau en bande enroulé autour du tuyau intérieur, caractérisé en ce que la ou les couches (2, 3, 4, 5, 6) du matériau en bande (7) enroulé autour du tuyau intérieur (1) sont reliées les unes aux autres et/ou au tuyau intérieur (1) sur une partie seulement de la longueur du tuyau intérieur.

2. Tuyau selon la revendication 1, caractérisé en ce que la ou les couches (2, 3, 4, 5, 6) du matériau en bande (7) enroulé autour du tuyau intérieur (1) sont reliées les unes aux autres et/ou au tuyau intérieur (1) au niveau des extrémités du tuyau intérieur.

3. Tuyau selon les revendications 1 et 2, caractérisé en ce que le matériau en bande (7) de chaque couche (2, 3, 4, 5, 6) est enroulé de façon qu'il y ait un espace (8) entre les enroulements du matériau en bande (7).

4. Tuyau selon la revendication 3, caractérisé en ce que la largeur de l'espace (8) entre les enroulements du matériau en bande (7) d'une couche représente 2 à 20 % de la largeur du matériau en bande (7).

5. Tuyau selon les revendications 3 et 4, caractérisé en ce que l'espace (8) représente 3 à 10 % de la largeur du matériau en bande (7).

6. Tuyau selon les revendications 3 à 5, caractérisé en ce que le matériau en bande (7) de la seconde couche (3) est enroulé de manière à recouvrir l'espace (8) entre les enroulements de la première couche (2).

7. Tuyau selon les revendications 1 à 5, caractérisé en ce que la largeur du matériau en bande (7) des deux premières couches (2, 3) est inférieure à la largeur du matériau en bande (7) des autres couches (4, 5, 6).

8. Tuyau selon les revendications 1 à 7, caractérisé en ce que le matériau en bande (7) est une bande de fibres pouvant ou non être imprégnée d'une matière plastique.

9. Tuyau selon la revendication 8, caractérisé en ce que le matériau en bande (7) est une bande en fibres de verre imprégnée de polypropylène.

10. Tuyau selon les revendications 1 à 9, caractérisé en ce qu'une enveloppe extérieure (9) est disposée autour du tuyau intérieur pourvu d'une ou de plusieurs couches (2, 3, 4, 5, 6) d'un matériau en bande (7) enroulé d'une manière lâche.

11. Tuyau selon la revendication 10, caractérisé en ce que l'enveloppe extérieure (9) est extrudée autour du tuyau intérieur (1) pourvu d'une ou de plusieurs couches (2, 3, 4, 5, 6) d'un matériau en bande (7) enroulé d'une manière lâche.

12. Tuyau composite comportant au moins un tuyau intérieur fait d'une matière thermoplastique et une ou plusieurs couches d'un matériau en bande enroulé autour du tuyau intérieur, les enroulements de la ou des couches étant reliés les uns aux autres, caractérisé en ce que les enroulements ne sont reliés les uns aux autres que localement, et en ce que chaque couche est déplaçable par rapport au tuyau intérieur (1).

13. Tuyau selon la revendication 12, caractérisé en ce que le matériau en bande (7) est constitué d'une bande de polypropylène tendue.

14. Touret sur lequel est enroulé un tuyau, caractérisé en ce que le tuyau est un tuyau selon l'une au moins des revendications 1 à 13 précédentes.
